# EUROPEAN PATENT APPLICATION

(11) **EP 4 648 368 A1**
(43) Date of publication of application: **12.11.2025**
(21) Application number: 24755955.2
(22) Date of filing: 29.01.2024
(51) Int. Cl.: H04L 27/26

(54) **SIGNAL SENDING METHOD AND APPARATUS**

(30) Priority: 16.02.2023 CN 202310152899
(71) Applicant: Huawei Technologies Co., Ltd., Shenzhen, Guangdong 518129 (CN)
(72) Inventor: LUO, Zhihu, Shenzhen, Guangdong 518129 (CN); WU, Yiling, Shenzhen, Guangdong 518129 (CN); JIN, Zhe, Shenzhen, Guangdong 518129 (CN)
(74) Representative: MERH-IP Matias Erny Reichl Hoffmann Patentanwälte PartG mbB
(86) International application number: PCT/CN2024/074549
(87) International publication number: WO 2024/169581

(57) **Abstract**

This application relates to the field of communication technologies, and discloses a signal sending method and an apparatus, to provide a solution for sending a low-power signal compatible with orthogonal frequency division multiplexing OFDM, to be compatible with a new radio NR system, so as to reduce impact on an existing NR signal. The method includes: determining, based on a first mapping set, a first target sequence corresponding to a first information bit sequence, where the first mapping set includes a first mapping relationship between 2^{K} candidate values and 2^{K} first sequences, each of the 2^{K} first sequences includes M elements, K is a quantity of bits of information bits whose transmission is supported on one OFDM symbol, and M is a quantity of subcarriers of a first frequency domain resource for transmitting the first information bit sequence; performing subcarrier mapping, inverse fast Fourier transform IFFT, and cyclic prefix CP addition on the first target sequence to obtain a first signal; and sending the first signal on the first frequency domain resource.

## Description

### CROSS-REFERENCE TO RELATED APPLICATIONS

This application claims priority to Chinese Patent Application No. 202310152899.8, filed with the China National Intellectual Property Administration on February 16, 2023 and entitled "SIGNAL SENDING METHOD AND APPARATUS", which is incorporated herein by reference in its entirety.

### TECHNICAL FIELD

Embodiments of this application relate to the field of communication technologies, and in particular, to a signal sending method and an apparatus.

### BACKGROUND

With popularization of machine type communication (machine type communication, MTC) and internet of things (internet of things, IoT) communication, an increasing quantity of internet of things devices are deployed in an existing network. For example, smart water meters, shared bicycles, and smart cities, environment monitoring, smart home, and forest fire prevention that are targeted at sensing and data collection, are deployed in the existing network. In the future, IoT devices are ubiquitous, and may be embedded in clothes, packages, keys, and the like. Almost all things can be online with enablement of internet of things technologies. However, in an internet of things application scenario, for example, medical care, smart home, an industrial sensor, or a wearable device, a size of an internet of things device is usually limited, and it is difficult to prolong a running time of the internet of things device by simply increasing a battery capacity. A current solution is to overcome a problem of a limitation, for example, in a size and power consumption of the internet of things device by using a low-power receiver.

The low-power receiver has a strict power consumption limit, for example, power consumption is less than 1 milliwatt (mW). Through amplitude modulation and envelope detection, the low-power receiver does not need to generate a radio frequency carrier signal by using a local oscillator in an operation of down-converting a radio frequency signal to a baseband signal, and using a radio frequency module with relatively high power consumption,, for example, a frequency mixer with high linearity and a voltage-controlled oscillator that can provide a precise local-frequency signal, may be avoided, thereby achieving a relatively low power consumption level. Based on features of the low-power receiver, a design requirement for a low-power signal is that a modulation scheme needs to support receiving in an incoherent reception manner, for example, envelope detection. Currently, low-power modulation schemes that support incoherent reception include amplitude shift keying (amplitude shift keying, ASK) and frequency shift keying (frequency shift keying, FSK). However, a current new radio (new radio, NR) system is an orthogonal frequency division multiplexing (orthogonal frequency division multiplexing, OFDM) system. When a low-power signal is introduced to the NR system, the low-power signal needs to be compatible with OFDM, so as to reduce impact on the existing NR system. Therefore, how to design a low-power signal that is compatible with OFDM and is compatible with an NR system is a problem worth considering.

### SUMMARY

Embodiments of this application provide a signal sending method and an apparatus, to provide a solution for sending a low-power signal compatible with OFDM, to be compatible with an NR system and the like, so as to reduce impact on an existing NR signal.

According to a first aspect, an embodiment of this application provides a signal sending method. The method may be performed by a first device. The method includes: determining, based on a first mapping set, a first target sequence corresponding to a first information bit sequence, where the first mapping set includes a first mapping relationship between 2^{K} candidate values and 2^{K} first sequences, each of the 2^{K} first sequences includes M elements, K is a quantity of bits of information bits whose transmission is supported on one OFDM symbol, and M is a quantity of subcarriers of a first frequency domain resource for transmitting the first information bit sequence; performing subcarrier mapping, inverse fast Fourier transform (inverse fast Fourier transform, IFFT), and cyclic prefix (cyclic prefix, CP) addition on the first target sequence to obtain a first signal; and sending the first signal on the first frequency domain resource.

According to the foregoing method, the first device (a sending device) may map information bits in the first information bit sequence to the first sequence that includes the quantity of elements equal to the quantity M of subcarriers of the frequency domain resource, to obtain the first target sequence, and perform subcarrier mapping, IFFT, and CP addition on the first target sequence, to generate a low-power signal of a CP-OFDM waveform, namely, the first signal, so that a second device (a receiving device) can determine, in an envelope detection manner based on an amplitude of the first signal on each OFDM symbol (for example, an average amplitude of a plurality of sampling points on each OFDM symbol), an information bit transmitted on each OFDM symbol of the first signal. In this way, a solution for sending a low-power signal compatible with OFDM is provided, so that sending of the low-power signal can be compatible with an NR system and the like, and impact of sending of the low-power signal on an NR signal is reduced.

In a possible design, the 2^{K} candidate values are 2^{K} code words corresponding to 2^{K} candidate values corresponding to K after Manchester encoding at a code rate R is performed on the 2^{K} candidate values. In the foregoing design, when the signal sending device and the signal receiving device support Manchester encoding, the first mapping relationship between the 2^{K} candidate values and the 2^{K} first sequences included in the first mapping set may be determined based on a code word obtained after Manchester encoding. This helps to generate a low-power signal compatible with OFDM when Manchester encoding is supported, and improve an application scenario of the signal sending method.

In a possible design, the method further includes: sending a second signal on a second frequency domain resource, where the second signal is obtained by performing subcarrier mapping, IFFT, and CP addition on a second target sequence, the second target sequence is determined from a second information bit sequence based on a second mapping set, and the second mapping set includes a second mapping relationship between the 2^{K} candidate values and 2^{K} second sequences. Optionally, the 2^{K} second sequences are the same as the 2^{K} first sequences, and the first mapping relationship is different from the second mapping relationship; or the 2^{K} second sequences are different from the 2^{K} first sequences, and the 2^{K} second sequences are obtained by inverting the 2^{K} first sequences. In the foregoing design, when the sending device sends different signals on different frequency domain resources, different mapping sets may be used on the different frequency domain resources. This helps avoid a relatively high peak-to-average power ratio (peak-to-average power ratio, PAPR) generated in time domain when a plurality of signals are sent in parallel on a plurality of frequency domain resources, thereby improving communication performance.

In a possible design, a first transmission period of the first signal may be different from a second transmission period of the second signal; and/or a start location for transmitting the first signal in the first transmission period may be different from a start location for transmitting the second signal in the second transmission period. In the foregoing design, when the sending device sends different signals on different frequency domain resources, transmission periods of the different signals are different and/or start locations for transmitting the different signals in the transmission periods are different. This helps avoid a relatively high PAPR generated in time domain when a plurality of signals are sent in parallel on a plurality of frequency domain resources, thereby improving communication performance.

In a possible design, the method further includes: sending first configuration information and second configuration information, where the first configuration information indicates at least one of the first transmission period of the first signal, the start location in the first transmission period, or duration in the first transmission period, and the second configuration information indicates at least one of the second transmission period of the second signal, the start location in the second transmission period, or duration in the second transmission period. In the foregoing design, the sending device may separately configure a plurality of signals sent on a plurality of frequency domain, to avoid simultaneous sending of signals on different frequency domain resources, thereby reducing a PAPR.

According to a second aspect, an embodiment of this application provides a signal sending method. The method may be performed by a first device, and includes: determining a first target sequence based on a first information bit sequence, where a ratio of a quantity of elements included in the first target sequence to a quantity of elements included in the first information bit sequence is M/K, K is a quantity of bits of information bits whose transmission is supported on one OFDM symbol, and M is a quantity of subcarriers of a first frequency domain resource used to transmit the first information bit sequence; performing discrete Fourier transform (discrete Fourier transform, DFT), subcarrier mapping, IFFT, and CP addition on the first target sequence to obtain a first signal; and sending the first signal on the first frequency domain resource.

According to the foregoing method, the first device (a sending device) may extend, based on the ratio of the quantity M of subcarriers of the first frequency domain resource for transmitting the first information bit sequence to the quantity K of bits of information bits whose transmission is supported on one OFDM symbol, the quantity of elements included in the first information bit sequence by M/K times, to obtain the first target sequence, and perform DFT, subcarrier mapping, IFFT, and CP processing on the first target sequence, to generate a low-power signal of a DFT-spread OFDM (DFT-spread OFDM, DFT-S-OFDM) waveform, namely, the first signal, so that a second device (receiving device) can determine, in an envelope detection manner based on an amplitude or an amplitude change on each OFDM symbol, an information bit transmitted on each OFDM symbol of the first signal. In this way, a solution for sending a low-power signal compatible with OFDM is provided, so that sending of the low-power signal can be compatible with an NR system and the like, and impact of sending of the low-power signal on an NR signal is reduced.

In a possible design, the first target sequence includes a sequence corresponding to at least one on (ON) signal and/or a sequence corresponding to at least one off (OFF) signal, and a sequence corresponding to one ON signal is formed by using an all-1 sequence, a Zadoff-Chu sequence, or a low peak-to-average power ratio PAPR sequence.

In a possible design, the sequence corresponding to the ON signal is formed by using a Zadoff-Chu sequence, and one or more of a root factor, a cyclic shift, a sequence group number u, and a sequence number v corresponding to the Zadoff-Chu sequence are determined based on a location of the first frequency domain resource or an index of the first frequency domain resource in a frequency domain resource set; or the sequence corresponding to the ON signal is formed by using a low PAPR sequence, and one or more of a sequence group number u and a sequence number v corresponding to the low PAPR sequence are determined based on a location of the first frequency domain resource or an index of the first frequency domain resource in a frequency domain resource set. In the foregoing design, when the sending device sends different signals on different frequency domain resources, ON signals on the different frequency domain resources may be corresponding to different sequences. This helps avoid a relatively high PAPR generated in time domain when a plurality of signals are sent in parallel on a plurality of frequency domain resources, thereby improving communication performance.

In a possible design, the method further includes: sending a second signal on a second frequency domain resource, where a first transmission period of the first signal may be different from a second transmission period of the second signal; and/or a start location for transmitting the first signal in the first transmission period may be different from a start location for transmitting the second signal in the second transmission period. In the foregoing design, when the sending device sends different signals on different frequency domain resources, transmission periods of the different signals are different and/or start locations for transmitting the different signals in the transmission periods are different. This helps avoid a relatively high PAPR generated in time domain when a plurality of signals are sent in parallel on a plurality of frequency domain resources, thereby improving communication performance.

In a possible design, the method further includes: sending first configuration information and second configuration information, where the first configuration information indicates at least one of the first transmission period of the first signal, the start location in the first transmission period, or duration in the first transmission period, and the second configuration information indicates at least one of the second transmission period of the second signal, the start location in the second transmission period, or duration in the second transmission period.

In the foregoing design, the sending device may separately configure a plurality of signals sent on a plurality of frequency domain, to avoid simultaneous sending of signals on different frequency domain resources, thereby reducing a PAPR.

According to a third aspect, an embodiment of this application provides a communication apparatus. The apparatus has a function of implementing the method in the first aspect. The function may be implemented by using hardware, or may be implemented by using hardware executing corresponding software. The hardware or the software includes one or more modules corresponding to the function, for example, a communication unit and a processing unit.

In a possible design, the apparatus may be a chip or an integrated circuit.

In a possible design, the apparatus includes a memory and a processor. The memory is configured to store a program executed by the processor. When the program is executed by the processor, the apparatus may perform the method in the first aspect.

In a possible design, the apparatus may be a first device, for example, a network device or a terminal device.

According to a fourth aspect, an embodiment of this application provides a communication apparatus. The apparatus has a function of implementing the method in the second aspect. The function may be implemented by using hardware, or may be implemented by using hardware executing corresponding software. The hardware or the software includes one or more modules corresponding to the function, for example, a communication unit and a processing unit.

In a possible design, the apparatus may be a chip or an integrated circuit.

In a possible design, the apparatus includes a memory and a processor. The memory is configured to store a program executed by the processor. When the program is executed by the processor, the apparatus may perform the method in the second aspect.

In a possible design, the apparatus may be a second device, for example, a network device or a terminal device.

According to a fifth aspect, an embodiment of this application provides a communication apparatus. The communication apparatus includes an interface circuit and a processor, and the processor and the interface circuit are coupled to each other. The processor is configured to implement the method in the first aspect by using a logic circuit or executing instructions. The interface circuit is configured to: receive a signal from a communication apparatus other than the communication apparatus and transmit the signal to the processor, or send a signal from the processor to a communication apparatus other than the communication apparatus. It may be understood that the interface circuit may be a transceiver, a transceiver machine, a transceiver, or an input/output interface.

Optionally, the communication apparatus may further include a memory, configured to: store instructions executed by the processor, or store input data required for running instructions by the processor, or store data generated after the processor runs instructions. The memory may be a physically independent unit, or may be coupled to the processor, or the processor includes the memory.

According to a sixth aspect, an embodiment of this application provides a communication apparatus. The communication apparatus includes an interface circuit and a processor, and the processor and the interface circuit are coupled to each other. The processor is configured to implement the method in the second aspect by using a logic circuit or executing instructions. The interface circuit is configured to: receive a signal from a communication apparatus other than the communication apparatus and transmit the signal to the processor, or send a signal from the processor to a communication apparatus other than the communication apparatus. It may be understood that the interface circuit may be a transceiver, a transceiver machine, a transceiver, or an input/output interface.

Optionally, the communication apparatus may further include a memory, configured to: store instructions executed by the processor, or store input data required for running instructions by the processor, or store data generated after the processor runs instructions. The memory may be a physically independent unit, or may be coupled to the processor, or the processor includes the memory.

According to a seventh aspect, an embodiment of this application provides a computer-readable storage medium. The storage medium stores a computer program or instructions. When the computer program or the instructions are executed by a processor, the method in the first aspect or the second aspect can be implemented.

According to an eighth aspect, an embodiment of this application further provides a computer program product, including a computer program or instructions. When the computer program or the instructions are executed by a processor, the method in the first aspect or the second aspect can be implemented.

According to a ninth aspect, an embodiment of this application further provides a chip system. The chip system includes a processor. The processor is coupled to a memory. The memory is configured to store a program or instructions. When the program or the instructions are executed by the processor, the method in the first aspect or the second aspect can be implemented.

For technical effects that can be achieved in the second aspect to the ninth aspect, refer to the technical effects that can be achieved in the first aspect or the second aspect. Details are not described herein again.

### BRIEF DESCRIPTION OF DRAWINGS

FIG. 1 is a diagram of an architecture of a communication system according to an embodiment of this application;
FIG. 2 is a diagram of ASK modulation according to an embodiment of this application;
FIG. 3 is a diagram of a low-power receiver based on a radio frequency tuning structure according to an embodiment of this application;
FIG. 4 is a diagram of a low-power receiver based on an uncertain intermediate frequency structure according to an embodiment of this application;
FIG. 5 is a schematic of an envelope detector according to an embodiment of this application;
FIG. 6 is a waveform diagram of a radio frequency signal input by an envelope detector according to an embodiment of this application;
FIG. 7 is a diagram 1 of a signal sending method according to an embodiment of this application;
FIG. 8 is a diagram of generating a CP-OFDM waveform according to an embodiment of this application;
FIG. 9 is a diagram of frequency division multiplexing of a signal according to an embodiment of this application;
FIG. 10 is a diagram of frequency division multiplexing of a signal in a duty cycle working mode according to an embodiment of this application;
FIG. 11 is a diagram 2 of a signal sending method according to an embodiment of this application;
FIG. 12 is a diagram of generating a DFT-S-OFDM waveform according to an embodiment of this application;
FIG. 13 is a diagram of frequency division multiplexing of a low-power signal and an NR signal according to an embodiment of this application;
FIG. 14 is a diagram 1 of a communication apparatus according to an embodiment of this application; and
FIG. 15 is a diagram 2 of a communication apparatus according to an embodiment of this application.

### DESCRIPTION OF EMBODIMENTS

A communication method provided in this application may be applied to various communication systems, for example, the internet of things (internet of things, IoT), the narrowband internet of things (narrowband internet of things, NB-IoT), a backscatter communication system (also referred to as a passive communication system), or a semi-passive communication system. Certainly, embodiments of this application are further applicable to another possible communication system, for example, a long term evolution (long term evolution, LTE) system, an LTE frequency division duplex (frequency division duplex, FDD) system, an LTE time division duplex (time division duplex, TDD) system, a long term evolution advanced (LTE advanced, LTE-A) system, a universal mobile telecommunications system (universal mobile telecommunications system, UMTS), a worldwide interoperability for microwave access (worldwide interoperability for microwave access, WiMAX) communication system, a 5G communication system (for example, an NR system), a future 6^{th} generation (6^{th} generation, 6G) communication system, or another future communication system or network. Alternatively, the communication system may be a machine to machine (machine to machine, M2M) network, a machine type communication (machine type communication, MTC) network, or another network.

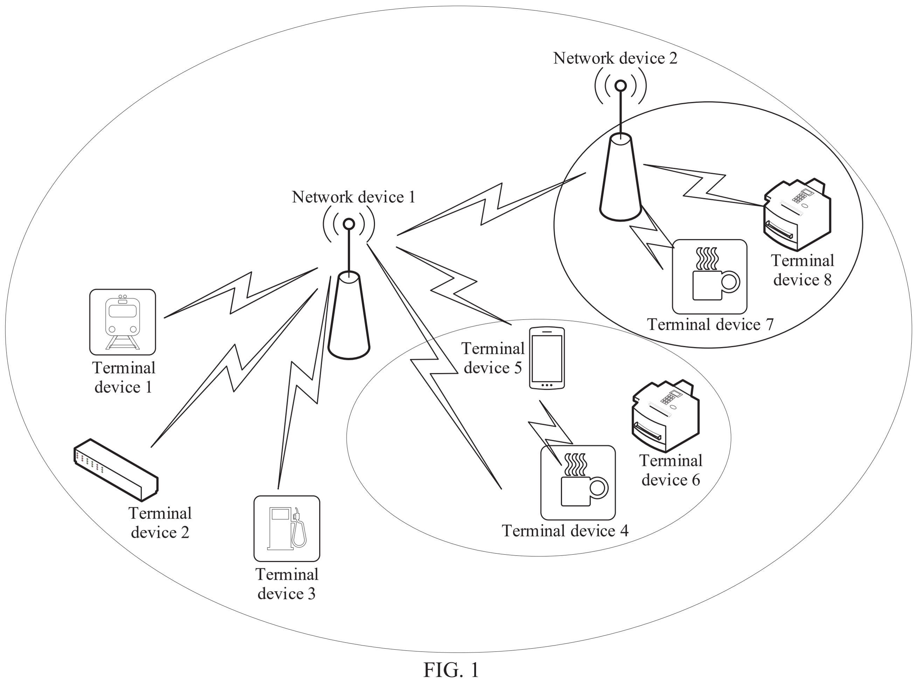

An architecture of a communication system to which the embodiments of this application are applied may be shown in FIG. 1. A structure of the communication system may include at least one network device and at least one terminal device. For example, as shown in FIG. 1, the communication system may include two network devices: a network device 1 and a network device 2, and eight terminal devices: a terminal device 1 to a terminal device 8.

In the communication system, the network device 1 may send information to one or more terminal devices in the terminal device 1 to the terminal device 6. The network device 1 may send information to one or more terminal devices in the terminal device 7 and the terminal device 8 through the network device 2. In addition, the terminal device 4 to the terminal device 6 may also form a communication subsystem. In the communication subsystem, the terminal device 5 may send information to one or more terminal devices in the terminal device 4 and the terminal device 6. The network device 2, the terminal device 7, and the terminal device 8 may also form a communication subsystem. In the communication subsystem, the network device 2 may send information to one or more terminal devices in the terminal device 7 and the terminal device 8. It should be understood that FIG. 1 is merely a diagram. A type of the communication system, and a quantity, a type, and the like of devices included in the communication system are not specifically limited in this application.

The network device may be a device having a wireless transceiver function or a chip that may be disposed in the network device. The network device includes but is not limited to: an LTE eNodeB (eNodeB), an NR generation NodeB (generation NodeB, gNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), an access point (access point, AP) in a wireless fidelity (wireless fidelity, Wi-Fi) system, a wireless relay node, a wireless backhaul node, a transmission and reception point (transmission and reception point, TRP), a transmission point (transmission point, TP), a reader (Reader), a helper (Helper), or the like. Alternatively, the network device may be a network node, for example, a baseband unit (BBU) or a distributed unit (distributed unit, DU), that constitutes a gNB or a transmission point. When the network device is a base station, the network device may be a macro base station, a micro base station, a small cell, or a pole site. The network device may be a network device that supports receiving of data transmitted through backscatter communication. Alternatively, the network device may be a network device that supports sending of a wake-up signal.

The terminal device may also be referred to as user equipment (UE, User Equipment), an access terminal, a subscriber unit, a subscriber station, a mobile site, a mobile station, a remote station, a remote terminal, a mobile device, a user terminal, a terminal, a wireless communication device, a user agent, or a user apparatus. The terminal device in embodiments of this application may be a mobile phone (mobile phone), a tablet computer (Pad), a computer having a wireless transceiver function, a passive terminal device, a passive IoT terminal device, a semi-passive terminal device, a semi-passive IoT terminal device, a virtual reality (virtual reality, VR) terminal device, an augmented reality (augmented reality, AR) terminal device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a smart wearable device (smart glasses, a smart watch, a smart headset, or the like), a wireless terminal in a smart home (smart home), a machine type communication terminal device, or the like. The terminal device may be a terminal device that supports backscatter communication, for example, a tag. The terminal device may be a device that supports a wake-up receiver, or may be a device that does not support a wake-up receiver. Alternatively, the terminal device may be a chip, a chip module (or a chip system), or the like that can be disposed in the foregoing device. An application scenario is not limited in embodiments of this application. A terminal device with a wireless transceiver function and a chip that can be disposed in the terminal device are collectively referred to as the terminal device in this application.

The architecture of the communication system and a scenario described in embodiments of this application are intended to describe technical solutions in embodiments of this application more clearly, and do not constitute a limitation on the technical solutions provided in embodiments of this application. A person of ordinary skill in the art may know that, with the evolution of a network architecture and the emergence of new service scenarios, the technical solutions provided in embodiments of this application are also applicable to similar technical problems.

For ease of understanding by a person skilled in the art, the following explains and describes some terms in embodiments of this application.

(1) Amplitude shift keying (amplitude shift keying, ASK) modulation. The ASK modulation is a modulation scheme in which an amplitude change of a carrier is controlled based on a value of a digital signal (or a baseband signal) and a frequency and a phase of the carrier remain unchanged, and the ASK modulation may also be referred to as digital amplitude modulation. A simplest form is binary amplitude shift keying (2ASK). For example, 2ASK modulation may be implemented by using a multiplier and a switch circuit. The carrier is on or off under control of a digital signal 1 or 0. When the digital signal is 1, a carrier of an amplitude A is on, and in this case, the carrier of the amplitude A is sent on a transmission channel. When the digital signal is 0, a carrier of an amplitude B is on, and in this case, the carrier of the amplitude B is sent on the transmission channel. Therefore, a receive end may determine whether the digital signal is 1 or 0 based on detection of an amplitude of a carrier.

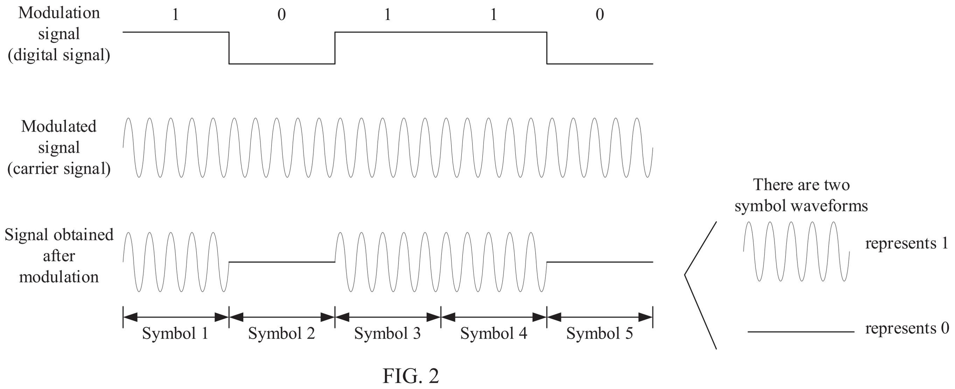

On-off keying (on-off keying, OOK) modulation is a special example of 2ASK modulation. For example, with reference to a diagram of ASK modulation shown in FIG. 2, a digital signal is a binary information bit sequence including 0 and 1. OOK modulation may be implemented by using a multiplier and a switch circuit. A carrier is on or off under control of a digital signal 1 or 0. When the digital signal is 1, the carrier is on, and in this case, the carrier is sent on a transmission channel (a carrier amplitude remains unchanged). When the digital signal is 0, no carrier is on. In this case, no carrier is sent on the transmission channel (the amplitude changes to 0). Therefore, a receive end may determine, based on detection of whether a carrier exists, whether the digital signal is 1 or 0. For example, when a bit is 0, an amplitude signal is transmitted in a symbol 1 (a carrier amplitude remains unchanged), and when a bit is 0, another amplitude signal is transmitted in a symbol 2 (the amplitude changes to 0). The receive end may determine, based on whether an amplitude (or an envelope, a level, energy, or the like) of the signal in each symbol is greater than an amplitude threshold, whether a bit transmitted in the symbol is 0 or 1.

(2) Conventional receiver and low-power receiver. The conventional receiver is mainly applied to a scenario that has a relatively high requirement on signal quality and a transmission rate. In these scenarios, a signal modulation scheme is generally relatively complex, and the conventional receiver needs to use some circuit modules with relatively high performance and relatively high precision, for example, a frequency mixer with high linearity and a voltage-controlled oscillator that can provide a high-precision local frequency. To ensure the performance of the circuit modules, power consumption of the conventional receiver cannot be reduced.

Compared with the conventional receiver, the low-power receiver needs to meet a strict power consumption limitation, for example, be less than 1 mW (mW). Through the ASK modulation and/or frequency shift keying (frequency shift keying, FSK) modulation, a low-power receiver may detect a signal in an envelope detection manner, so as to avoid using a circuit module with relatively high power consumption, for example, a frequency mixer with high linearity or a voltage-controlled oscillator that can provide a precise local-frequency signal. Therefore, the low-power receiver may achieve a relatively low power consumption level. Currently, the low-power receiver may use a structure, for example, a radio frequency tuning structure or an uncertain intermediate frequency structure.

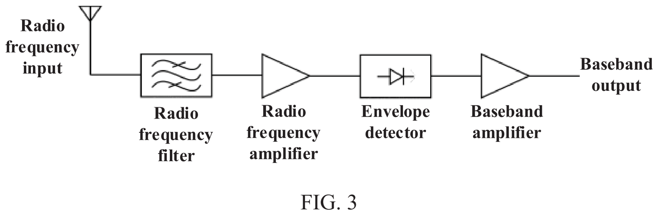

FIG. 3 is a diagram of a low-power receiver based on a radio frequency tuning structure. The low-power receiver may include a radio frequency filter, a radio frequency amplifier, an envelope detector, and a baseband amplifier. For a radio frequency signal that is input, the radio frequency filter may filter the radio frequency signal, so as to suppress impact of an unnecessary signal (for example, an interference signal) on a link. The filtered radio frequency signal may be amplified by the radio frequency amplifier and then demodulated by the envelope detector to output a baseband signal, and the baseband signal output by the detector is amplified by the baseband amplifier to obtain a final baseband signal for output.

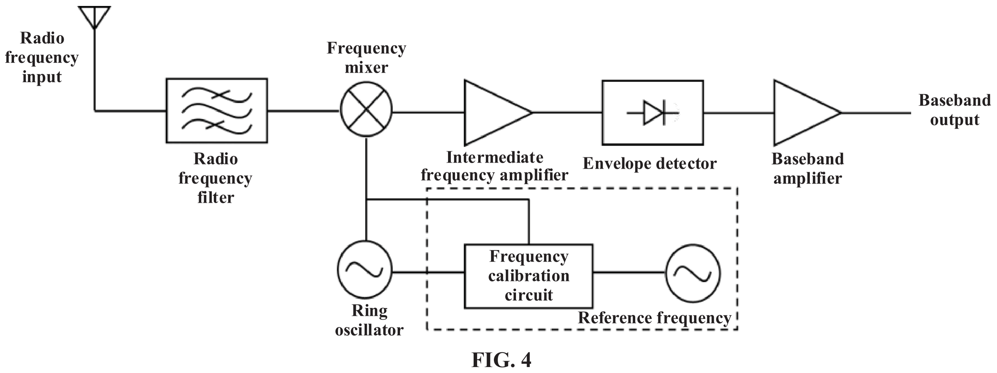

FIG. 4 is a diagram of a low-power receiver based on an uncertain intermediate frequency structure. The low-power receiver mainly includes three parts: a ring oscillator, an intermediate frequency amplifier, and an envelope detector. A radio frequency signal is converted into a low-frequency intermediate frequency signal by a frequency mixer. Then, the intermediate frequency signal is amplified by the intermediate frequency amplifier and then demodulated by the envelope detector to output a baseband signal. The frequency mixer is used in the structure, and a local-frequency signal needs to be provided for the frequency mixer. Generally, the ring oscillator is used to generate a local-frequency signal because the ring oscillator has a simple structure and low power consumption. However, a frequency offset generated by the ring oscillator is relatively large, and changes within a specific range. An intermediate frequency obtained after mixing of a frequency generated by the ring oscillator and a radio frequency signal is uncertain. Therefore, a structure of the receiver is referred to as an uncertain intermediate frequency structure. Because a frequency of the local-frequency signal generated by the ring oscillator is not accurate, and changes with time and temperature, an additional frequency calibration circuit may be required to calibrate a frequency of the ring oscillator.

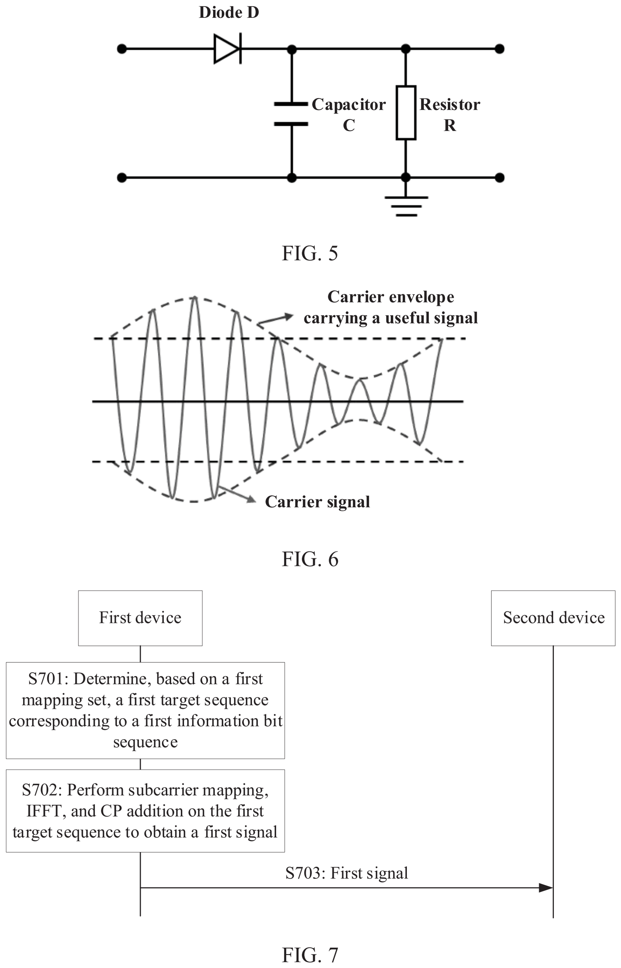

(3) Envelope detection principle: A module that completes envelope (or amplitude, level, energy, or the like) detection in the low-power receiver is referred to as an envelope detector. Generally, the envelope detector mainly includes a diode and an RC oscillation circuit. The envelope detector is a non-linear component, which works by using a unidirectional conductivity of the diode. FIG. 5 shows an example of an envelope detector. When a forward voltage is input to a left side, and a potential difference between the left side and a right side of a diode is higher than a conduction voltage, the diode is turned on, a current flows to the ground through a resistor R, a potential difference exists between two ends of a capacitor C, and the capacitor works in a charging state. When a reverse voltage is input to the left side, the diode is in an off state, which is also referred to as a non-conducting state, and in this case, the capacitor is in a discharging state, and a current flows to the ground through the resistor R. A discharging rate is related to a time constant (R×C). FIG. 6 is a diagram of a waveform of a radio frequency signal input by an envelope detector. The envelope detector may obtain, based on a carrier signal waveform of the input radio frequency signal, a useful signal carried by a carrier envelope, so as to obtain a baseband signal for output. According to the foregoing description of the envelope detection principle, it may be learned that the envelope detection may implement a down-conversion operation, that is, down-conversion of a radio frequency signal to a baseband. In the down-conversion operation, a radio frequency carrier signal does not need to be generated by using a local oscillator.

It may be learned from the foregoing description of the low-power receiver that, a design requirement for a signal (referred to as a low-power signal for short below) that can be processed by the low-power receiver is that a modulation scheme of the signal needs to support receiving in an incoherent reception manner, for example, envelope (or amplitude, level, energy, or the like) detection. Currently, modulation schemes of low-power signals that support incoherent reception include ASK and FSK. However, a current new radio (new radio, NR) system is an OFDM system. When a low-power signal is introduced to the NR system, the low-power signal needs to be compatible with OFDM, so as to reduce impact on the existing NR system. Therefore, how to design a low-power signal that is compatible with OFDM and is compatible with an NR system is a problem worth considering.

Based on this, this application provides a signal sending method and an apparatus, to provide a solution for sending a low-power signal compatible with OFDM, to be compatible with an NR system, so as to reduce impact on an existing NR signal. The following describes in detail embodiments of this application with reference to accompanying drawings.

In addition, it should be understood that ordinal numbers such as "first" and "second" mentioned in embodiments of this application are used to distinguish between a plurality of objects, and are not used to limit sizes, content, a sequence, a time sequence, priorities, importance degrees, or the like of the plurality of objects. For example, the first sequence and the second sequence do not indicate different priorities, importance degrees, or the like corresponding to the two sequences.

In embodiments of this application, unless otherwise specified, a quantity of nouns represents "a singular noun or a plural noun", that is, "one or more". "At least one" means one or more, and "a plurality of" means two or more. "And/or" describes an association relationship between associated objects and indicates that three relationships may exist. For example, A and/or B may indicate the following cases: Only A exists, both A and B exist, and only B exists, where A and B may be singular or plural. The character "/" generally indicates an "or" relationship between associated objects. For example, A/B indicates A or B. "At least one of the following items (pieces)" or a similar expression thereof means any combination of these items, including a singular item (piece) or any combination of plural items (pieces). For example, at least one (piece) of a, b, or c represents a, b, c, a and b, a and c, b and c, or a, b, and c, where a, b, and c may be singular or plural.

FIG. 7 shows a signal sending method according to an embodiment of this application. In FIG. 7, an example in which a first device and a second device are used as execution bodies is used to show the method. The first device may be a network device, and the second device may be a terminal device or a network device different from the first device. Alternatively, the first device may be a terminal device, and the second device may be a network device or a terminal device different from the first device. It may be understood that the network device may be a component (for example, a processor, a chip, or a chip system) of the network device or an apparatus that is used in cooperation with the network device. The terminal device may be a component (for example, a processor, a chip, or a chip system) of the terminal device or an apparatus that is used in cooperation with the terminal device. The method includes the following steps.

S701: The first device determines, based on a first mapping set, a first target sequence corresponding to a first information bit sequence.

The first mapping set includes a first mapping relationship between 2^{K} candidate values and 2^{K} first sequences, each of the 2^{K} first sequences includes M elements (in other words, having a length of M), K is a quantity of bits of information bits whose transmission is supported on one OFDM symbol, and M is a quantity of subcarriers of a first frequency domain resource for transmitting the first information bit sequence.

In this embodiment of this application, OOK modulation and the like may be applied to an NR system, and information carried on each OFDM symbol is determined based on an amplitude (or an envelope, a level, energy, or the like) of a carrier on the OFDM symbol. For example, if an average amplitude of a carrier on an OFDM symbol is high or is not 0, a signal on the carrier is referred to as an open or on (ON) signal (or the OFDM symbol is an ON symbol) that indicates 1; and if an average amplitude of a carrier on an OFDM symbol is low or is 0, a signal on the carrier is referred to as a closed or an off (OFF) signal (or the OFDM symbol is an OFF symbol) that indicates 0. The ON signal and the OFF signal may be collectively referred to as an OOK signal. An amplitude is defined relative to an amplitude demodulation threshold of a receiver. If an amplitude is greater than the demodulation threshold, the amplitude is high; and if an amplitude is less than the demodulation threshold, the amplitude is low.

In a possible implementation, a plurality of mapping sets for different values of K and different values of M may be preconfigured in the first device and the second device, or the first device and the second device may negotiate a plurality of mapping sets in advance for different values of K and different values of M. The first device and the second device may select a corresponding mapping set from the plurality of mapping sets as the first mapping set based on corresponding values of K and M that are used when the first information bit sequence is transmitted.

K=1 and M=12 are used as an example. The first mapping set may be shown in Table 1. A quantity of information bits whose transmission is supported on one OFDM symbol is 1 bit, and corresponds to 2¹ candidate values (which may also be referred to as 2¹ candidate states), which are respectively 0 and 1; and 2¹ first sequences are respectively a first sequence A11 (aa0, aa1, ..., aa11) and a first sequence A12 (ab0, ab1, ..., ab11), the candidate value 0 is mapped to the first sequence A11, and the candidate value 1 is mapped to the first sequence A12. The first sequence A11 and the first sequence A12 each include 12 elements, for example, the first sequence A11 includes elements aa0, aa1, ..., and aa11. The elements in the first sequence A11 and the first sequence A12 may be phase shift keying (phase shift keying, BPSK) or quadrature amplitude modulation (quadrature amplitude modulation, QAM) modulation symbols, or a Zadoff-Chu sequence.

**Table 1**

| Candidate value | First sequence |
|---|---|
| 0 | aa0, aa1, ..., aa11 (A11) |
| 1 | ab0, ab1, ..., ab11 (A12) |

The first terminal device may determine, based on the first mapping set, a first sequence corresponding to a first information bit sequence on each OFDM symbol, to obtain a first target sequence corresponding to the first information bit sequence. In an example, the first information bit sequence is 1011, K=1, and transmission of the first information bit sequence occupies four OFDM symbols (a symbol 1 to a symbol 4 are used as an example). In this case, in the first information bit sequence, an information bit transmitted on the symbol 1 is 1, and a corresponding first sequence is A12; an information bit transmitted on the symbol 2 is 0, and a corresponding first sequence is A11; an information bit transmitted on the symbol 3 is 1, and a corresponding first sequence is A12; and an information bit transmitted on the symbol 4 is 1, and a corresponding first sequence is A12. The first target sequence corresponding to the first information bit sequence is A12, A11, A12, and A12.

K=2 and M=12 are used as an example. The first mapping set may be shown in Table 2. A quantity of information bits whose transmission is supported on one OFDM symbol is 2 bits, and corresponds to 2² candidate values, which are respectively 00, 01, 10, and 11; and 2² first sequences are respectively a first sequence A11 (aa0, aa1, ..., aa11), a first sequence A12 (ab0, ab1, ..., ab11), a first sequence A13 (ac0, ac1, ..., ac11), and a first sequence A14 (ad0, ad1, ..., ad11), the candidate value 00 is mapped to the first sequence A11, the candidate value 01 is mapped to the first sequence A12, the candidate value 10 is mapped to the first sequence A11, and the candidate value 11 is mapped to the first sequence A12. The first sequence A11, the first sequence A12, the first sequence A13, and the first sequence A14 each include 12 elements, and each element may be a PSK or QAM modulation symbol, or a Zadoff-Chu sequence.

**Table 2**

| Candidate value | First sequence |
|---|---|
| 00 | aa0, aa1, ..., aa11 (A11) |
| 01 | ab0, ab1, ..., ab11 (A12) |
| 10 | ac0, ac1, ..., ac11 (A13) |
| 11 | ad0, ad1, ..., ad11 (A14) |

Still in an example in which the first information bit sequence is 1011, K=2, and transmission of the first information bit sequence occupies two OFDM symbols (a symbol 1 and a symbol 2 are used as an example). In this case, in the first information bit sequence, an information bit transmitted on the symbol 1 is 10, and a corresponding first sequence is A13; and an information bit transmitted on the symbol 2 is 11, and a corresponding first sequence is A14. The first target sequence corresponding to the first information bit sequence is A13 and A14.

In another possible implementation, if the first device and the second device support Manchester encoding, an encoded first information bit sequence is transmitted between the first device and the second device, and the 2^{K} candidate values in the first mapping set may be further 2^{K} code words corresponding to 2^{K} candidate values corresponding to K after Manchester encoding at a code rate R is performed on the 2^{K} candidate values.

K=1, M=12, and R=1/2 are still used as an example. A quantity of information bits whose transmission is supported on one OFDM symbol is 1 bit, and corresponds to 2¹ candidate values, which are respectively 0 and 1. A code word (or encoded bits) obtained after Manchester encoding at a code rate of 1/2 is performed on 0 is 01, and a code word (or encoded bits) obtained after Manchester encoding at a code rate of 1/2 is performed on 1 is 10. In other words, a quantity of bits of code words whose transmission is supported on each OFDM symbol is 2 bits. The first mapping set may be shown in Table 3. A quantity of bits of code words whose transmission is supported on one OFDM symbol is 2 bits, and corresponds to two code words, which are respectively 01 and 10; and 2¹ first sequences are respectively a first sequence A11 (aa0, aa1, ..., aa11) and a first sequence A12 (ab0, ab1, ..., ab11), the candidate value 01 is mapped to the first sequence A11, and the candidate value 10 is mapped to the first sequence A12. The first sequence A11 and the first sequence A12 each include 12 elements, and each element may be a PSK or QAM modulation symbol, or a Zadoff-Chu sequence.

**Table 3**

| Candidate value | First sequence |
|---|---|
| 01 | aa0, aa1, ..., aa11 (A11) |
| 10 | ab0, ab1, ..., ab11 (A12) |

Still in an example in which the first information bit sequence is 1011, K=1, and transmission of the first information bit sequence occupies four OFDM symbols (a symbol 1 to a symbol 4 are used as an example). In this case, the first information bit sequence is 10011010 after Manchester encoding at a code rate of 1/2 is performed. For the first information bit sequence, a code word transmitted on the symbol 1 is 10, and a corresponding first sequence is A12; a code word transmitted on the symbol 2 is 01, and a corresponding first sequence is A11; a code word transmitted on the symbol 3 is 10, and a corresponding first sequence is A12; and a code word transmitted on the symbol 4 is 1, and a corresponding first sequence is A12. The first target sequence corresponding to the first information bit sequence is A12, A11, A12, and A12.

S702: The first device performs subcarrier mapping, IFFT, and CP addition on the first target sequence to obtain a first signal.

S703: The first device sends the first signal on the first frequency domain resource, and correspondingly, the second device receives the first signal on the first frequency domain resource.

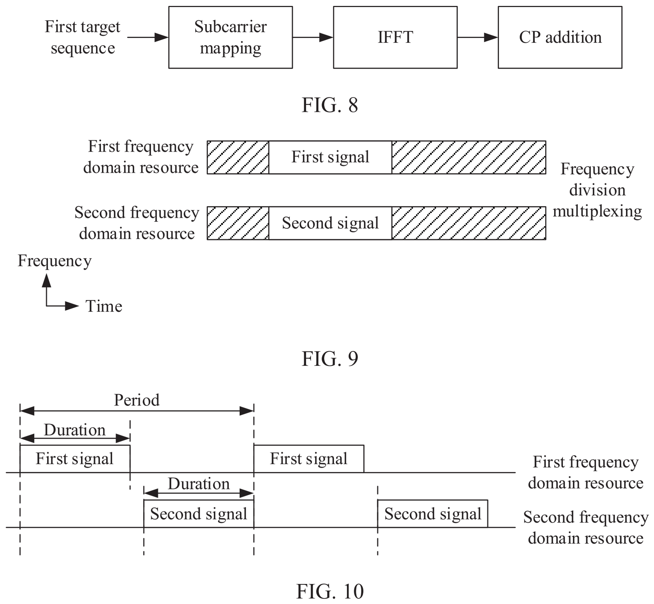

With reference to FIG. 8 that is a diagram of generating a CP-OFDM waveform, after determining the first target sequence corresponding to the first information bit sequence, the first device may perform subcarrier mapping on the first target sequence, that is, map M elements that correspond to the first target sequence on each OFDM symbol to M subcarriers of the first frequency domain resource, and perform inverse fast Fourier transform (inverse fast Fourier transform, IFFT) and cyclic prefix (cyclic prefix, CP) addition operations on a mapped sequence, to obtain an OFDM time domain signal of a low-power signal, that is, the first signal. After receiving the first signal, the second device may determine the first information bit sequence based on the first signal.

That the first mapping set is shown in Table 1 is used as an example. The second device may determine an amplitude demodulation threshold in advance based on an amplitude of a carrier signal corresponding to the sequence A11 and an amplitude of a carrier signal corresponding to the sequence A12. For example, the amplitude of the carrier signal corresponding to the sequence A11 is less than the amplitude demodulation threshold, and the amplitude of the carrier signal corresponding to the sequence A12 is greater than the amplitude demodulation threshold. After receiving the first signal, the second device performs envelope detection. If it is detected that an average amplitude of the first signal on the symbol 0 is greater than the amplitude demodulation threshold, the second device determines that an information bit corresponding to the symbol 0 is 1. If it is detected that an average amplitude of the first signal on the symbol 1 is less than the amplitude demodulation threshold, the second device determines that an information bit corresponding to the symbol 1 is 0. In this way, the first information bit sequence is determined based on the first signal.

In some implementations, to support a large quantity of connections or different services, the first device may further send a plurality of signals in parallel on a plurality of frequency domain resources in a frequency division multiplexing manner. However, when a plurality of signals are sent in parallel on a plurality of frequency domain resources, a relatively high peak-to-average power ratio (peak-to-average power ratio, PAPR) may be generated in time domain. In addition, because a dynamic range of a power amplifier at a transmit end (for example, the first device) is usually limited, a signal with a relatively high PAPR is very likely to enter a non-linear area of the power amplifier, and consequently, non-linear distortion occurs in the signal, obvious spectrum extension interference and in-band signal distortion are caused, and performance of an entire system is severely degraded. Therefore, when a plurality of signals are sent in a frequency division multiplexing manner, how to reduce a PAPR needs to be considered.

In a possible implementation, signals sent on different frequency domain resources correspond to different mapping relationships in mapping sets.

FIG. 9 is a diagram of frequency division multiplexing of a signal. In addition to sending the first signal on the first frequency domain resource, the first device further sends a second signal on a second frequency domain resource. The second signal may be obtained by the second device by performing subcarrier mapping, IFFT, and CP addition on a second target sequence, and the second target sequence is determined by the first device from a second information bit sequence based on a second mapping set. The second mapping set includes a second mapping relationship between 2^{K} candidate values and 2^{K} second sequences. The 2^{K} second sequences may be the same as the 2^{K} first sequences in the first mapping set, but the second mapping relationship between the 2^{K} candidate values and the 2^{K} second sequences in the second set is different from the first mapping relationship between the 2^{K} candidate values and the 2^{K} first sequences in the first set.

The first mapping set shown in Table 4 and the second mapping set shown in Table 5 are used as an example. Sequences (the first sequence and the second sequence) in the first mapping set and the second mapping set are the same. However, in the first mapping set (that is, on the first frequency domain resource), a candidate value 0 corresponds to a first sequence A11 (aa0, aa1, ..., aa11), and a candidate value 1 corresponds to a first sequence A12 (ab0, ab1, ..., ab11). In the second mapping set (that is, on the second frequency domain resource), a candidate value 0 corresponds to a second sequence A21 (ab0, ab1, ..., ab11), and a candidate value 1 corresponds to a second sequence A22 (aa0, aa1, ..., aa11).

**Table 4**

| Candidate value | First sequence |
|---|---|
| 0 | aa0, aa1, ..., aa11 (A11) |
| 1 | ab0, ab1, ..., ab11 (A12) |

**Table 5**

| Candidate value | Second sequence |
|---|---|
| 0 | ab0, ab1, ..., ab11 (A21) |
| 1 | aa0, aa1, ..., aa11 (A22) |

In another possible implementation, signals sent on different frequency domain resources correspond to different sequences in mapping sets.

The first mapping set shown in Table 6 and the second mapping set shown in Table 7 are used as an example, sequences (the first sequence and the second sequence) in the first mapping set and in the second mapping set are different, and the second sequence in the second mapping set may be obtained by inverting the first sequence in the first mapping set. For example, the second sequence A21 is obtained by inverting the first sequence A11, and the second sequence A22 is obtained by inverting the first sequence A12. In the first mapping set (that is, on the first frequency domain resource), a candidate value 0 corresponds to a first sequence A11 (aa0, aa1, ..., aa11), and a candidate value 1 corresponds to a first sequence A12 (ab0, ab1, ..., ab11). In the second mapping set (that is, on the second frequency domain resource), a candidate value 0 corresponds to a second sequence A21 (aa11, aa10, ..., aa0), and a candidate value 1 corresponds to a second sequence A22 (ab11, ab10, ..., ab0).

**Table 6**

| Candidate value | First sequence |
|---|---|
| 0 | aa0, aa1, ..., aa11 (A11) |
| 1 | ab0, ab1, ..., ab11 (A12) |

**Table 7**

| Candidate value | Second sequence |
|---|---|
| 0 | aa11, aa10, ..., aa0 (A21) |
| 1 | ab11, ab10, ..., ab0 (A22) |

It may be understood that, for values of a group of K and M, N mapping sets may be preconfigured in the first device and the second device, or N mapping sets may be negotiated in advance. For example, for K=1 and M=2, there are a first mapping set shown in Table 4 and a second mapping set shown in Table 5. The N mapping sets may be numbered with indexes sequentially denoted as 0, 1, ..., and N-1. When sending a signal on a plurality of frequency domain resources in a frequency division multiplexing manner, the first device may select a corresponding mapping set based on a value of an index mod N of a frequency domain resource. For example, if N=2, an index 1 of a frequency domain resource 1 mod N is 1, and a mapping set whose index is 1 is selected; and an index 2 of a frequency domain resource 2 mod N is 0, and a mapping set whose index is 0 is selected.

In addition, for sending a plurality of low-power signals (for example, the first signal and the second signal) in a frequency division multiplexing manner, a receiving device (for example, the second device) may further reduce power consumption of receiving the low-power signals in a duty cycle (duty cycle) mode. A duty cycle working mode is different from an always on (always on) working mode. The always on working mode is that a receiving device (for example, the second device) cannot predict an occasion when a sending device (for example, the first device) sends a low-power signal. To avoid missing receiving of the low-power signal, the receiving device needs to keep a receiving state constantly. Therefore, power consumption of the receiving device in this manner is higher. A duty cycle working mode is that a sending device and a receiving device agree on an occasion for transmitting a low-power signal, and the low-power signal may be periodically transmitted. The sending device does not send a low-power signal except at the agreed time. In this manner, the receiving device may turn off a receiver at a time when it is impossible for a low-power signal to occur, to further reduce power consumption. In consideration of the duty cycle working mode, another idea of reducing a PAPR is that the sending device ensures, through configuration, that low-power signals on different frequency domain resources are not simultaneously sent, to reduce the PAPR. As shown in FIG. 10, when a working mode of a receiving device (for example, the second device) is a duty cycle working mode, sending occasions (or times) of low-power signals configured by the sending device (for example, the first device) on different frequency domain resources are different. For example, the first device may configure that a first transmission period of the first signal is different from a second transmission period of the second signal; and/or a start location for transmitting the first signal in the first transmission period is different from a start location for transmitting the second signal in the second transmission period.

In some implementations, to support the case in which signals on different frequency domain resources are not simultaneously sent, and reduce a PAPR, the first device may independently configure a parameter of a signal on each frequency domain resource. For example, when sending the first signal and the second signal in a frequency division multiplexing manner, the first device may separately send first configuration information and second configuration information to a device that receives the first signal and the second signal, where the first configuration information indicates at least one of the first transmission period of the first signal, the start location in the first transmission period, or duration in the first transmission period, and the second configuration information indicates at least one of the second transmission period of the second signal, the start location in the second transmission period, or duration in the second transmission period.

The foregoing mainly describes generation of a low-power signal compatible with OFDM by using a CP-OFDM waveform. In some implementations, a low-power signal may be generated by using a discrete Fourier transform (discrete Fourier transform, DFT)-spread OFDM (DFT-spread OFDM) waveform, so as to be compatible with OFDM.

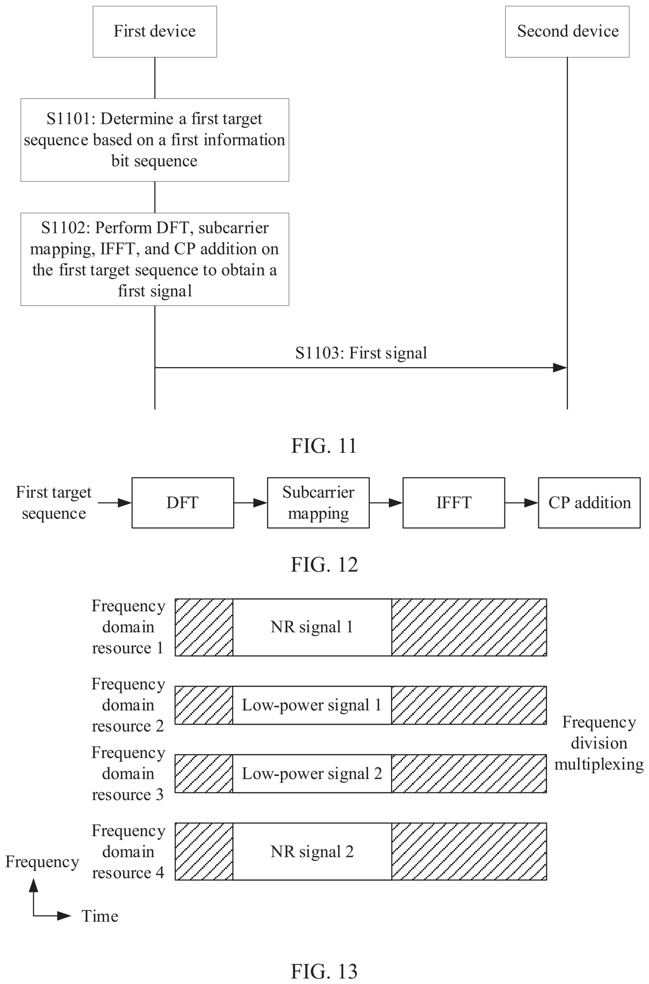

FIG. 11 shows another signal sending method according to an embodiment of this application. The method includes the following steps.

S1101: A first device determines a first target sequence based on a first information bit sequence.

A ratio (which may also be referred to as a length ratio) of a quantity of elements included in the first target sequence to a quantity of elements included in the first information bit sequence is M/K, K is a quantity of bits of information bits whose transmission is supported on one OFDM symbol, and M is a quantity of subcarriers of a first frequency domain resource used to transmit the first information bit sequence.

S1102: The first device performs DFT, subcarrier mapping, IFFT, and CP addition on the first target sequence to obtain a first signal.

S1103: The first device sends the first signal on the first frequency domain resource, and correspondingly, the second device receives the first signal.

In this embodiment of this application, OOK modulation and the like may be applied to an NR system, and information carried on each OFDM symbol is determined based on an amplitude (or an envelope, a level, energy, or the like) of a carrier on the OFDM symbol. For example, if an average amplitude of a carrier on an OFDM symbol is high or is not 0, a signal on the carrier is referred to as an on (ON) signal (or the OFDM symbol is an ON symbol) that indicates 1; and if an average amplitude of a carrier on an OFDM symbol is low or is 0, a signal on the carrier is referred to as an off (OFF) signal (or the OFDM symbol is an OFF symbol) that indicates 0. The ON signal and the OFF signal may be collectively referred to as an OOK signal. An amplitude is defined relative to an amplitude demodulation threshold of a receiver. If an amplitude is greater than the demodulation threshold, the amplitude is high; and if an amplitude is less than the demodulation threshold, the amplitude is low.

When the quantity of bits of information bits whose transmission is supported on one OFDM symbol is K, and the quantity of subcarriers of the first frequency domain resource used to transmit the first information bit sequence is M, in this embodiment of this application, a quantity of elements of the first information bit sequence may be extended by M/K times, so that the first information bit sequence may be mapped to M subcarriers.

In a possible implementation, M is greater than or equal to K, and the first device may perform upsampling (or repetition) processing on the first information bit sequence to obtain the first target sequence, where a multiple of upsampling (or a quantity of repetitions) is M/K. In other words, one 0 in the first information bit sequence corresponds to M/K 0s in the first target sequence, and one 1 in the first information bit sequence corresponds to M/K 1s in the first target sequence. M=12, K=4, and M/K=3 are used as an example, the first information bit sequence is 1, 0, 1, 0, and the first target sequence 1, 1, 1, 0, 0, 0, 1, 1, 1, 0, 0, 0 is obtained after upsampling is performed on the first information bit sequence 1, 0, 1, 0 by using a multiple of M/K or a repeated operation repeated M/K times.

The first information bit sequence 1, 0, 1, 0 may represent ON, OFF, ON, and OFF, where ON may represent an ON signal in OOK modulation, OF may represent an OFF signal in OOK modulation, and M/K 1s in the first target sequence represent a time domain signal corresponding to an upsampled or repeated ON signal. Therefore, the ON signal may be formed by using an all-1 sequence. In some implementations, because the receiving device (for example, the second device) receives a signal in an envelope detection manner, and in the envelope detection, only amplitude detection is performed, the ON signal in the first target sequence may alternatively be formed by using any constant envelope sequence. For example, the ON signal may be formed by using a Zadoff-Chu sequence, because the Zadoff-Chu sequence has a flat spectrum and has better performance of resisting frequency selective fading. Alternatively, the ON signal may be formed by using a low PAPR sequence defined in the NR system. For definitions of the Zadoff-Chu sequence and the low PAPR sequence, refer to descriptions in section 5.2 in the 3^{rd} Generation Partnership Project (3^{rd} generation partnership project, 3GPP) TS38.211 V17.4.0. With reference to FIG. 12 that is a diagram of generating a DFT-S-OFDM waveform, after determining the first target sequence corresponding to the first information bit sequence, the first device may perform DFT on the first target sequence, perform subcarrier mapping on the first target sequence obtained after the DFT, that is, map M elements that correspond to the first target sequence on each OFDM symbol to M subcarriers of the first frequency domain resource, and perform IFFT and CP addition operations on a mapped sequence, to obtain an OFDM time domain signal of a low-power signal, that is, the first signal. After receiving the first signal, the second device may determine the first information bit sequence based on the first signal.

In an example, after receiving the first signal, the second device detects, in an envelope detection manner, that an amplitude of the first signal jumps to high-low-high-low, and determines that the first information bit sequence is 1010.

It should be understood that, in the communication method (CP-OFDM waveform) shown in FIG. 7, the first target sequence corresponding to the first information bit sequence determined based on the first mapping set may also be considered as a sequence obtained after DFT in the communication method (DFT-S-OFDM waveform) shown in FIG. 11.

In some implementations, to support a large quantity of connections or different services, the first device may further send a plurality of signals in parallel on a plurality of frequency domain resources in a frequency division multiplexing manner. However, when a plurality of signals are sent in parallel on a plurality of frequency domain resources, a relatively high PAPR may be generated in time domain. In addition, because a dynamic range of a power amplifier at a transmit end (for example, the first device) is usually limited, a signal with a relatively high PAPR is very likely to enter a non-linear area of the power amplifier, and consequently, non-linear distortion occurs in the signal, obvious spectrum extension interference and in-band signal distortion are caused, and performance of an entire system is severely degraded. Therefore, when a plurality of signals are sent in a frequency division multiplexing manner, how to reduce a PAPR needs to be considered.

In a possible implementation, when an ON signal in a target sequence corresponding to signals sent by the first device on different frequency domain resources is formed by using a Zadoff-Chu sequence, one or more of a root factor, a cyclic shift, a sequence group number u, and a sequence number v of the Zadoff-Chu sequence are determined based on a location of a frequency domain resource for sending the signal or an index of a frequency domain resource in a frequency domain resource set. For example, when an ON signal in the first target sequence corresponding to the first signal sent on the first frequency domain resource is formed by using a Zadoff-Chu sequence, one or more of a root factor, a cyclic shift, a sequence group number u, and a sequence number v corresponding to the Zadoff-Chu sequence may be determined based on a location of the first frequency domain resource or an index of the first frequency domain resource in a frequency domain resource set. In other words, when the first device sends signals on different frequency domain resources, Zadoff-Chu sequence generation factors such as a root factor, a cyclic shift, u, and v that are used for the ON signal may be different, so that when the first device sends signals on different frequency domain resources, Zadoff-Chu sequences used for ON signals are different, to reduce a PAPR.

Similarly, to reduce a PAPR, when an ON signal in a target sequence corresponding to signals sent by the first device on different frequency domain resources is formed by using a low PAPR sequence, one or more of a sequence group number u and a sequence number v corresponding to the low PAPR sequence may also be determined based on a location of a frequency domain resource for sending the signal or an index of a frequency domain resource in a frequency domain resource set. For example, when an ON signal in the first target sequence corresponding to the first signal sent on the first frequency domain resource is formed by using a low PAPR sequence, one or more of a sequence group number u and a sequence number v corresponding to the PAPR sequence are determined based on a location of the first frequency domain resource or an index of the first frequency domain resource in a frequency domain resource set.

In addition, similar to generating a low-power signal by using a CP-OFDM waveform, when a low-power signal is generated by using a DFT-spread OFDM waveform, for sending a plurality of low-power signals (for example, the first signal and the second signal) in a frequency division multiplexing manner, a receiving device (for example, the second device) may further reduce power consumption of receiving the low-power signals in a duty cycle mode. A duty cycle working mode is different from an always on working mode. The always on working mode is that a receiving device (for example, the second device) cannot predict an occasion when a sending device (for example, the first device) sends a low-power signal. To avoid missing receiving of the low-power signal, the receiving device needs to keep a receiving state constantly. Therefore, power consumption of the receiving device in this manner is higher. A duty cycle working mode is that a sending device and a receiving device agree on an occasion for transmitting a low-power signal, and the low-power signal may be periodically transmitted. The sending device does not send a low-power signal except at the agreed time. In this manner, the receiving device may turn off a receiver at a time when it is impossible for a low-power signal to occur, to further reduce power consumption. In consideration of the duty cycle working mode, another idea of reducing a PAPR is that the sending device ensures, through configuration, that low-power signals on different frequency domain resources are not simultaneously sent, to reduce the PAPR. As shown in FIG. 10, when a working mode of a receiving device (for example, the second device) is a duty cycle working mode, sending occasions (or times) of low-power signals configured by the sending device (for example, the first device) on different frequency domain resources are different. For example, the first device may configure that a first transmission period of the first signal is different from a second transmission period of the second signal; and/or a start location for transmitting the first signal in the first transmission period is different from a start location for transmitting the second signal in the second transmission period.

In some implementations, to support the case in which signals on different frequency domain resources are not simultaneously sent, and reduce a PAPR, the first device may independently configure a parameter of a signal on each frequency domain resource. For example, when sending the first signal and the second signal in a frequency division multiplexing manner, the first device may separately send first configuration information and second configuration information to a device that receives the first signal and the second signal, where the first configuration information indicates at least one of the first transmission period of the first signal, the start location in the first transmission period, or duration in the first transmission period, and the second configuration information indicates at least one of the second transmission period of the second signal, the start location in the second transmission period, or duration in the second transmission period.

FIG. 13 is a diagram of frequency division multiplexing of a low-power signal and an NR signal. By using the low-power signal generated by using the CP-OFDM waveform or the DFT-spread OFDM waveform, a sending device (for example, the first device) may send an NR signal (for example, an NR signal 1 and an NR signal 2) and a low-power signal (for example, a low-power signal 1 and a low-power signal 2) in a frequency division multiplexing manner, which is compatible with an NR system.

It should be understood that, in this embodiment of this application, when a plurality of signals are sent on a plurality of frequency domain resources in a frequency division multiplexing manner, the plurality of frequency domain resources may not overlap in frequency domain.

The foregoing mainly describes the solutions provided in this application from perspectives of the first device and the second device. It may be understood that, to implement the foregoing functions, each device includes a corresponding hardware structure and/or a corresponding software module (or unit) for executing each function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

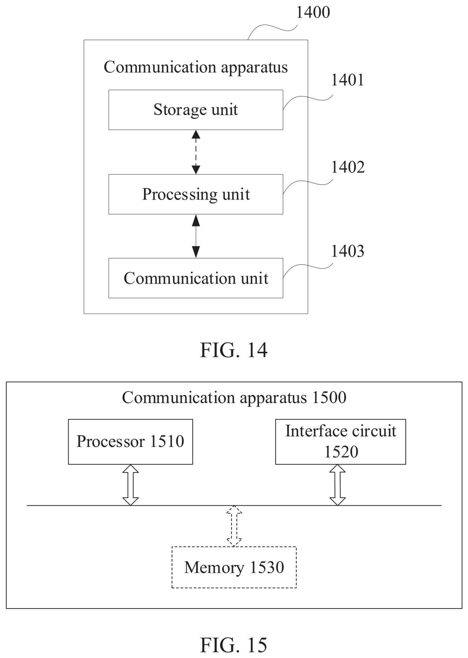

FIG. 14 and FIG. 15 each are a diagram of a structure of a possible communication apparatus according to an embodiment of this application. These communication apparatuses may be configured to implement functions of the first device or the second device in the foregoing method embodiments, and therefore can also implement beneficial effects of the foregoing method embodiments. In embodiments of this application, the communication apparatus may be the first device in FIG. 7 or FIG. 11, or may be the second device in FIG. 7 or FIG. 11, or may be a module (for example, a chip) applied to the first device or the second device.

As shown in FIG. 14, a communication apparatus 1400 may include a processing unit 1402 and a communication unit 1403, and may further include a storage unit 1401. The communication apparatus 1400 is configured to implement a function of the first device or the second device in the method embodiment shown in FIG. 7 or FIG. 11.

When the communication apparatus 1400 is configured to implement the functions of the first device in the method embodiment shown in FIG. 7,

the processing unit 1402 is configured to determine, based on a first mapping set, a first target sequence corresponding to a first information bit sequence, where the first mapping set includes a first mapping relationship between 2^{K} candidate values and 2^{K} first sequences, each of the 2^{K} first sequences includes M elements, K is a quantity of bits of information bits whose transmission is supported on one OFDM symbol, and M is a quantity of subcarriers of a first frequency domain resource for transmitting the first information bit sequence; and perform subcarrier mapping, IFFT, and CP addition on the first target sequence to obtain a first signal; and the communication unit 1403 is configured to send the first signal on the first frequency domain resource.

In a possible design, the 2^{K} candidate values are 2^{K} code words corresponding to 2^{K} candidate values corresponding to K after Manchester encoding at a code rate R is performed on the 2^{K} candidate values.

In a possible design, the communication unit 1403 is further configured to send a second signal on a second frequency domain resource, where the second signal is obtained by performing subcarrier mapping, IFFT, and CP addition on a second target sequence, the second target sequence is determined from a second information bit sequence based on a second mapping set, and the second mapping set includes a second mapping relationship between the 2^{K} candidate values and 2^{K} second sequences.

In a possible design, the 2^{K} second sequences are the same as the 2^{K} first sequences, and the first mapping relationship is different from the second mapping relationship; or the 2^{K} second sequences are different from the 2^{K} first sequences, and the 2^{K} second sequences are obtained by inverting the 2^{K} first sequences.

In a possible design, a first transmission period of the first signal is different from a second transmission period of the second signal; and/or a start location for transmitting the first signal in the first transmission period is different from a start location for transmitting the second signal in the second transmission period.

In a possible design, the communication unit 1403 is further configured to send first configuration information and second configuration information, where the first configuration information indicates at least one of the first transmission period of the first signal, the start location in the first transmission period, or duration in the first transmission period, and the second configuration information indicates at least one of the second transmission period of the second signal, the start location in the second transmission period, or duration in the second transmission period.

When the communication apparatus 1400 is configured to implement the functions of the first device in the method embodiment shown in FIG. 11,

the processing unit 1402 is configured to determine a first target sequence based on a first information bit sequence, where a ratio of a quantity of elements included in the first target sequence to a quantity of elements included in the first information bit sequence is M/K, K is a quantity of bits of information bits whose transmission is supported on one OFDM symbol, and M is a quantity of subcarriers of a first frequency domain resource used to transmit the first information bit sequence; and perform DFT, subcarrier mapping, IFFT, and CP addition on the first target sequence to obtain a first signal; and the communication unit 1403 is configured to send the first signal on the first frequency domain resource.

In a possible design, the first target sequence includes a sequence corresponding to at least one on (ON) signal and/or a sequence corresponding to at least one off (OFF) signal, and a sequence corresponding to one ON signal is formed by using an all-1 sequence, a Zadoff-Chu sequence, or a low PAPR sequence.

In a possible design, the sequence corresponding to the ON signal is formed by using a Zadoff-Chu sequence, and one or more of a root factor, a cyclic shift, a sequence group number u, and a sequence number v corresponding to the Zadoff-Chu sequence are determined based on a location of the first frequency domain resource or an index of the first frequency domain resource in a frequency domain resource set; or the sequence corresponding to the ON signal is formed by using a low PAPR sequence, and one or more of a sequence group number u and a sequence number v corresponding to the low PAPR sequence are determined based on a location of the first frequency domain resource or an index of the first frequency domain resource in a frequency domain resource set.

In a possible design, the communication unit 1403 is further configured to send a second signal on a second frequency domain resource, where a first transmission period of the first signal is different from a second transmission period of the second signal; and/or a start location for transmitting the first signal in the first transmission period is different from a start location for transmitting the second signal in the second transmission period.

In a possible design, the communication unit 1403 is further configured to send first configuration information and second configuration information, where the first configuration information indicates at least one of the first transmission period of the first signal, the start location in the first transmission period, or duration in the first transmission period, and the second configuration information indicates at least one of the second transmission period of the second signal, the start location in the second transmission period, or duration in the second transmission period.

As shown in FIG. 15, a communication apparatus 1500 includes a processor 1510 and an interface circuit 1520. The processor 1510 and the interface circuit 1520 are coupled to each other. It may be understood that the interface circuit 1520 may be a transceiver or an input/output interface. Optionally, the communication apparatus 1500 may further include a memory 1530, configured to: store instructions executed by the processor 1510, or store input data required for running instructions by the processor 1510, or store data generated after the processor 1510 runs instructions.

When the communication apparatus 1500 is configured to implement the method shown in FIG. 7 or FIG. 11, the processor 1510 is configured to implement the function of the processing unit 1402, and the interface circuit 1520 is configured to implement the function of the communication unit 1403.

In another form of this embodiment, a computer-readable storage medium is provided. The computer-readable storage medium stores a program or instructions. When the program or the instructions are executed, a communication method applicable to the first device in the foregoing method embodiment may be performed.

In another form of this embodiment, a computer program product including instructions is provided. When the instructions are executed, a communication method applicable to the first device in the foregoing method embodiment may be performed.

In another form of this embodiment, a chip is provided. When running, the chip may perform a communication method applicable to the first device in the foregoing method embodiment.

It may be understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a logic circuit, a field programmable gate array (field programmable gate array, FPGA), or another programmable logic device, a transistor logic device, a hardware component, or any combination thereof. The general-purpose processor may be a microprocessor or any regular processor or the like.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a network device or a terminal device. Certainly, the processor and the storage medium may alternatively exist as discrete components in a network device or a terminal device.

All or some of the foregoing embodiments may be implemented by using software, hardware, firmware, or any combination thereof. When software is used to implement the embodiments, all or some of the embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer programs or instructions may be stored in a computer-readable storage medium, or transmitted from one computer-readable storage medium to another computer-readable storage medium. For example, the computer programs or instructions may be transmitted from one network device, terminal, computer, server, or data center to another network device, terminal, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In addition, it should be understood that in embodiments of this application, the term "for example" is used to represent giving an example, an illustration, or a description. Any embodiment or design scheme described as an "example" in this application should not be explained as being more preferred or having more advantages than another embodiment or design scheme. Exactly, the term "example" is for presenting a concept in a specific manner.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A signal sending method, comprising:
determining, based on a first mapping set, a first target sequence corresponding to a first information bit sequence, wherein the first mapping set comprises a first mapping relationship between 2^{K} candidate values and 2^{K} first sequences, each of the 2^{K} first sequences comprises M elements, K is a quantity of bits of information bits whose transmission is supported on one orthogonal frequency division multiplexing OFDM symbol, and M is a quantity of subcarriers of a first frequency domain resource for transmitting the first information bit sequence;
performing subcarrier mapping, inverse fast Fourier transform IFFT, and cyclic prefix CP addition on the first target sequence to obtain a first signal; and
sending the first signal on the first frequency domain resource.

2. The method according to claim 1, wherein the 2^{K} candidate values are 2^{K} code words corresponding to 2^{K} candidate values corresponding to K after Manchester encoding at a code rate R is performed on the 2^{K} candidate values.

3. The method according to claim 1 or 2, wherein the method further comprises:
sending a second signal on a second frequency domain resource, wherein the second signal is obtained by performing subcarrier mapping, IFFT, and CP addition on a second target sequence, the second target sequence is determined from a second information bit sequence based on a second mapping set, and the second mapping set comprises a second mapping relationship between the 2^{K} candidate values and 2^{K} second sequences.

4. The method according to claim 3, wherein the 2^{K} second sequences are the same as the 2^{K} first sequences, and the first mapping relationship is different from the second mapping relationship; or
the 2^{K} second sequences are different from the 2^{K} first sequences, and the 2^{K} second sequences are obtained by inverting the 2^{K} first sequences.

5. The method according to claim 3 or 4, wherein a first transmission period of the first signal is different from a second transmission period of the second signal; and/or
a start location for transmitting the first signal in the first transmission period is different from a start location for transmitting the second signal in the second transmission period.

6. The method according to any one of claims 3 to 5, wherein the method further comprises:
sending first configuration information and second configuration information, wherein the first configuration information indicates at least one of the first transmission period of the first signal, the start location in the first transmission period, or duration in the first transmission period, and the second configuration information indicates at least one of the second transmission period of the second signal, the start location in the second transmission period, or duration in the second transmission period.

7. A signal sending method, comprising:
determining a first target sequence based on a first information bit sequence, wherein a ratio of a quantity of elements comprised in the first target sequence to a quantity of elements comprised in the first information bit sequence is M/K, K is a quantity of bits of information bits whose transmission is supported on one orthogonal frequency division multiplexing OFDM symbol, and M is a quantity of subcarriers of a first frequency domain resource used to transmit the first information bit sequence;
performing discrete Fourier transform DFT, subcarrier mapping, inverse fast Fourier transform IFFT, and CP addition on the first target sequence to obtain a first signal; and
sending the first signal on the first frequency domain resource.

8. The method according to claim 7, wherein the first target sequence comprises a sequence corresponding to at least one on ON signal and/or a sequence corresponding to at least one off OFF signal, and a sequence corresponding to one ON signal is formed by using an all-1 sequence, a Zadoff-Chu sequence, or a low peak-to-average power ratio PAPR sequence.

9. The method according to claim 8, wherein the sequence corresponding to the ON signal is formed by using a Zadoff-Chu sequence, and one or more of a root factor, a cyclic shift, a sequence group number u, and a sequence number v corresponding to the Zadoff-Chu sequence are determined based on a location of the first frequency domain resource or an index of the first frequency domain resource in a frequency domain resource set; or
the sequence corresponding to the ON signal is formed by using a low PAPR sequence, and one or more of a sequence group number u and a sequence number v corresponding to the low PAPR sequence are determined based on a location of the first frequency domain resource or an index of the first frequency domain resource in a frequency domain resource set.

10. The method according to any one of claims 7 to 9, wherein the method further comprises:
sending a second signal on a second frequency domain resource, wherein a first transmission period of the first signal is different from a second transmission period of the second signal; and/or
a start location for transmitting the first signal in the first transmission period is different from a start location for transmitting the second signal in the second transmission period.

11. The method according to claim 10, wherein the method further comprises:
sending first configuration information and second configuration information, wherein the first configuration information indicates at least one of the first transmission period of the first signal, the start location in the first transmission period, or duration in the first transmission period, and the second configuration information indicates at least one of the second transmission period of the second signal, the start location in the second transmission period, or duration in the second transmission period.

12. A communication apparatus, comprising a communication unit and a processing unit, wherein
the processing unit is configured to determine, based on a first mapping set, a first target sequence corresponding to a first information bit sequence, wherein the first mapping set comprises a first mapping relationship between 2^{K} candidate values and 2^{K} first sequences, each of the 2^{K} first sequences comprises M elements, K is a quantity of bits of information bits whose transmission is supported on one orthogonal frequency division multiplexing OFDM symbol, and M is a quantity of subcarriers of a first frequency domain resource for transmitting the first information bit sequence; and perform subcarrier mapping, inverse fast Fourier transform IFFT, and cyclic prefix CP addition on the first target sequence to obtain a first signal; and
the communication unit is configured to send the first signal on the first frequency domain resource.

13. The apparatus according to claim 12, wherein the 2^{K} candidate values are 2^{K} code words corresponding to 2^{K} candidate values corresponding to K after Manchester encoding at a code rate R is performed on the 2^{K} candidate values.

14. The apparatus according to claim 12 or 13, wherein the communication unit is further configured to send a second signal on a second frequency domain resource, wherein the second signal is obtained by performing subcarrier mapping, IFFT, and CP addition on a second target sequence, the second target sequence is determined from a second information bit sequence based on a second mapping set, and the second mapping set comprises a second mapping relationship between the 2^{K} candidate values and 2^{K} second sequences.

15. The apparatus according to claim 14, wherein the 2^{K} second sequences are the same as the 2^{K} first sequences, and the first mapping relationship is different from the second mapping relationship; or
the 2^{K} second sequences are different from the 2^{K} first sequences, and the 2^{K} second sequences are obtained by inverting the 2^{K} first sequences.

16. The apparatus according to claim 14 or 15, wherein a first transmission period of the first signal is different from a second transmission period of the second signal; and/or
a start location for transmitting the first signal in the first transmission period is different from a start location for transmitting the second signal in the second transmission period.

17. The apparatus according to any one of claims 14 to 16, wherein the communication unit is further configured to send first configuration information and second configuration information, wherein the first configuration information indicates at least one of the first transmission period of the first signal, the start location in the first transmission period, or duration in the first transmission period, and the second configuration information indicates at least one of the second transmission period of the second signal, the start location in the second transmission period, or duration in the second transmission period.

18. A communication apparatus, comprising a communication unit and a processing unit, wherein
the processing unit is configured to determine a first target sequence based on a first information bit sequence, wherein a ratio of a quantity of elements comprised in the first target sequence to a quantity of elements comprised in the first information bit sequence is M/K, K is a quantity of bits of information bits whose transmission is supported on one orthogonal frequency division multiplexing OFDM symbol, and M is a quantity of subcarriers of a first frequency domain resource used to transmit the first information bit sequence; and perform discrete Fourier transform DFT, subcarrier mapping, inverse fast Fourier transform IFFT, and CP addition on the first target sequence to obtain a first signal; and
the communication unit is configured to send the first signal on the first frequency domain resource.

19. The apparatus according to claim 18, wherein the first target sequence comprises a sequence corresponding to at least one on ON signal and/or a sequence corresponding to at least one off OFF signal, and a sequence corresponding to one ON signal is formed by using an all-1 sequence, a Zadoff-Chu sequence, or a low peak-to-average power ratio PAPR sequence.

20. The apparatus according to claim 19, wherein the sequence corresponding to the ON signal is formed by using a Zadoff-Chu sequence, and one or more of a root factor, a cyclic shift, a sequence group number u, and a sequence number v corresponding to the Zadoff-Chu sequence are determined based on a location of the first frequency domain resource or an index of the first frequency domain resource in a frequency domain resource set; or
the sequence corresponding to the ON signal is formed by using a low PAPR sequence, and one or more of a sequence group number u and a sequence number v corresponding to the low PAPR sequence are determined based on a location of the first frequency domain resource or an index of the first frequency domain resource in a frequency domain resource set.

21. The apparatus according to any one of claims 18 to 20, wherein the communication unit is further configured to send a second signal on a second frequency domain resource, wherein a first transmission period of the first signal is different from a second transmission period of the second signal; and/or a start location for transmitting the first signal in the first transmission period is different from a start location for transmitting the second signal in the second transmission period.

22. The apparatus according to claim 21, wherein the communication unit is further configured to send first configuration information and second configuration information, wherein the first configuration information indicates at least one of the first transmission period of the first signal, the start location in the first transmission period, or duration in the first transmission period, and the second configuration information indicates at least one of the second transmission period of the second signal, the start location in the second transmission period, or duration in the second transmission period.

23. A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus; and the processor is configured to implement the method according to any one of claims 1 to 11 by using a logic circuit or by executing code instructions.

24. A computer program product, comprising a program or instructions, wherein when the program or the instructions are executed by a processor, the method according to any one of claims 1 to 11 is implemented.

25. A chip system, wherein the chip system comprises a processor, the processor is configured to be coupled to a memory, the memory is configured to store a program or instructions, and when the program or the instructions are executed by the processor, the method according to any one of claims 1 to 11 is implemented.

26. A computer-readable storage medium, wherein the storage medium stores a computer program or instructions, and when the computer program or the instructions are executed by a processor, the method according to any one of claims 1 to 11 is implemented.
